# EUROPEAN PATENT SPECIFICATION

(11) **EP 0 582 578 B1**
(45) Date of publication and mention of the grant of the patent: **27.05.1998**
(21) Application number: 92906052.3
(22) Date of filing: 05.03.1992
(51) Int. Cl.: H04B 7/005, H03G 3/20

(54) **A METHOD AND A DEVICE FOR CONTROLLING A RADIO TRANSMITTER**
VERFAHREN UND EINRICHTUNG ZUR STEUERUNG EINES FUNKSENDERS
METHODE ET DISPOSITIF DE COMMANDE D'UN EMETTEUR RADIO

(30) Priority: 06.03.1991 FI 911136
(43) Date of publication of application: 16.02.1994
(73) Proprietor: NOKIA TELECOMMUNICATIONS OY, 02150 Espoo (FI)
(72) Inventor: SEPPÄLÄ, Seppo, SF-90250 Oulu (FI)
(74) Representative: Tomlinson, Kerry John
(86) International application number: FI9200066
(87) International publication number: WO9216059

(56) References cited:
- EP-A- 0 407 135
- EP-A- 0 414 352
- US-A- 4 754 231
- US-A- 4 992 753

## Description

The invention relates to a method and a device for controlling the power of a control channel in a radiotelephone system. In the method, the power of the control channel is kept constant during normal operation. The device according to the invention is such as disclosed in the preamble portion of the attached claim 3.

The method and the device according to the invention can be used e.g. in the GSM mobile radio network, but it is equally applicable to radio systems of other types in which the channels are divided into separate traffic and control channels.

In the GSM radio system, the traffic channels utilize dynamic control of transmitting power both at the base station and at mobile stations. The power control word comprises four bits, which means that there are 16 power levels available. The spacing between two successive power levels is 2 dB, and so the entire power control range is 30 dB. In a so-called TX-on time slot, in which the transmission takes place, the transmitting power is adjusted in each time slot of the frame to one of the 16 different power levels in accordance with the above-mentioned power control word. A so-called TX-off time slot, in turn, is a time slot in which no transmission occurs (the RF power is zero). In this connection, EP Patent Application 414352 A2 is referred to, which describes in more detail both the GSM system and a radio transmitter belonging to it, the transmitting power of the radio transmitter being adjustable in the TX-on time slot to one of the above-mentioned 16 power levels.

One of the control channels of the GSM system is a broadcast control channel (BCCH) which is a one-way channel from the base station to a mobile station. (The control channels and the frame structure of the GSM system are described in greater detail e.g. in INSKO publication 121-89 GSM-yleiseurooppalainen matkapuhelinverkko [GSM Pan-European mobile radio network], Chapters X and XI.) The broadcast control channel transmits data concerning one specific cell (about e.g. power levels, frequencies, etc.) to the mobile station. The power control of the mobile station is based on measurements performed by the base station, and *vice versa.* As the measurements performed by the mobile station must have a reference level, the power transmitted at the BCCH frequency is constant in each cell. However, this power is not the same as the maximum power of the transmitter. Therefore the power of the BCCH channel should also be controllable.

The object of the present invention is to provide a method and a device which enable the (constant) power of the control channel to be controlled easily and simply. This is achieved by means of a method according to the invention in such a way that power data is transmitted on the control channel at least in the first time slot of the frame and the power of the control channel is locked throughout each frame to a level determined in said first time slot.

The basic idea of the invention is that power data is transmitted also on the control channel at least in the first time slot of each frame, whereas the power of the entire frame is locked in this control channel transmission to the power level determined in the first time slot while ignoring the power control orders received in the other time slots.

By means of the arrangement of the invention, the (constant) power of the BCCH channel of the GSM system, for instance, is easy to control and it is possible to use the same units as on the traffic channels irrespective of the nominal power level of the base station.

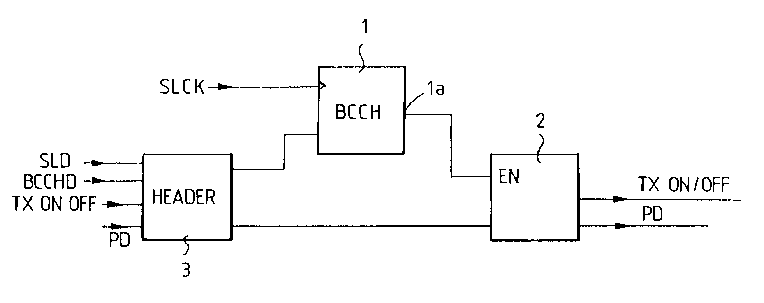

In the following the invention will be described in more detail with reference to the example of the attached Figure 1, which illustrates the power control of a BCCH transmission according to the invention.

As already mentioned above, the power of the BCCH transmission must be kept constant. Data about the BCCH transmission can be received only in the first time slot of the frame. The power control arrangement according to the invention comprises a BCCH counter 1 to the input of which a time slot clock SLCK is coupled (a time slot clock is a clock generating one pulse per time slot) and which counts all the eight time slots of the frame. The output la of the BCCH counter is coupled to the enable pin of a power level buffer 2. The power level buffer is preceded by a header buffer 3 which stores the power level data PD of each time slot of the frame. The header buffer receives time slot data SLD, BCCH data BCCHD, TX-on/off data and power level data PD at its inputs. In connection with the BCCH transmission, the headers of each time slot which contain the power level data are separated from the data stream, as they should not be carried along with the data to be modulated. When the header buffer 3 identifies the BCCH transmission, it causes the BCCH counter 1 to admit only the power level data received in the time slot zero to the power level buffer 2. Power level data received in the other time slots of the frame of the BCCH transmission remain in the header buffer 3. After the BCCH data, the BCCH counter 1 counts the next seven time slots, whereafter new power data can again be triggered into the power level buffer 2.

If the transmission is not a BCCH transmission, the BCCH counter enables the power level buffer 2 to continuously receive new data, that is, the arrangement does not influence the transmission in any way, but the power level data PD and TX on/off data pass through the buffers in a normal way and are then applied to the control circuitry of the memory circuit, in which the power control voltages corresponding to the different power levels are stored. The memory circuit is described in greater detail in the parallel FI-B-89648. The memory circuit with the microprocessor controlling it and the associated radio transmitter equipment may also be e.g. such as described in the above-mentioned EP-A-414 352.

Even though the invention has been described above with reference to the example of the attached drawing, it is to be understood that the invention is not restricted to it but it can be modified in many ways within the inventive idea defined above and in the attached claims.

## Claims

1. A method for controlling the control channel transmitting power of a base station transmitter in a radiotelephone system, such as the GSM mobile radio network, wherein data is transmitted in successive frames each comprising a predetermined number of time slots, and wherein the power of a control channel is kept constant during normal operation, **characterized** in that power level data (PD) is applied to the transmitter in the time slots of the frame, and in the case of a control channel frame, the power is locked throughout each frame to a level determined in the first time slot of said frame.

2. A method according to claim 1, **characterized** in that the power level data (PD) is applied in each time slot of the frame also on the control channel.

3. A device for controlling the control channel transmitting power of a base station transmitter transmitting data in successive frames each comprising a predetermined number of time slots, comprising means for controlling constant power, **characterized** in that said means comprise locking means (1, 2, 3) for locking the transmitting power throughout each control frame to a level determined in the first time slot of the frame.

4. A device according to claim 3, **characterized** in that the locking means comprise a counter (1) and successive buffers (2, 3), of which the second buffer (2) stores power level data (PD) received in the first time slot of each frame throughout the frame, and power level data (PD) possibly received in the other time slots of the frame are left in the first buffer (3).

## Patentansprüche

1. Verfahren zum Steuern der Steuerkanal-Übertragungsleistung eines Basisstationssenders in einem Funktelefonsystem wie etwa dem GSM-Mobilfunknetz, wobei Daten in aufeinanderfolgenden Rahmen übertragen werden, die jeweils eine vorbestimmte Anzahl von Zeitschlitzen aufweisen, und wobei die Leistung eines Steuerkanals im Normalbetrieb konstant gehalten wird, **dadurch gekennzeichnet**, daß Leistungspegeldaten (PD) dem Sender in den Zeitschlitzen des Rahmens zugeführt werden und im Fall eines Steuerkanalrahmens die Leistung in jedem gesamten Rahmen auf einem Pegel eingerastet wird, der in dem ersten Zeitschlitz des Rahmens bestimmt wird.

2. Verfahren nach Anspruch 1, **dadurch gekennzeichnet**, daß die Leistungspegeldaten (PD) in jedem Zeitschlitz des Rahmens auch dem Steuerkanal zugeführt werden.

3. Vorrichtung zum Steuern der Steuerkanal-Übertragungsleistung eines Basisstationssenders, der Daten in aufeinanderfolgenden Rahmen sendet, die jeweils eine vorbestimmte Anzahl von Zeitschlitzen aufweisen, wobei die Vorrichtung eine Einrichtung zum Steuern einer konstanten Leistung aufweist, **dadurch gekennzeichnet**, daß die Einrichtung Einrasteinrichtungen (1, 2, 3) zum Einrasten der Übertragungsleistung in jedem gesamten Steuerrahmen auf einem Pegel aufweist, der in dem ersten Zeitschlitz des Rahmen bestimmt wird.

4. Vorrichtung nach Anspruch 3, **dadurch gekennzeichnet,** daß die Einrasteinrichtungen aufweisen: einen Zähler (1) und aufeinanderfolgende Puffer (2, 3), von denen der zweite Puffer (2) Leistungspegeldaten (PD) speichert, die in dem ersten Zeitschlitz jedes Rahmens in dem gesamten Rahmen empfangen werden, und Leistungspegeldaten (PD), die eventuell in den anderen Zeitschlitzen des Rahmens empfangen werden, in dem ersten Puffer (3) belassen.

## Revendications

1. Procédé de commande de la puissance de transmission de la voie de commande d'un émetteur de station de base d'un système de radiotéléphones, tel que le réseau de radiotéléphones mobiles GSM, dans lequel les données sont transmises par trames successives dont chacune comprend un nombre prédéterminé de tranches de temps, et dans lequel la puissance d'une voie de commande est maintenue constante en fonctionnement normal,
caractérisé en ce que des données de niveau de puissance (PD) sont appliquées à l'émetteur dans les tranches de temps de la trame, et que, dans le cas d'une trame de voie de commande, la puissance est bloquée pour chaque trame à un niveau déterminé au cours de la première tranche de temps de ladite trame.

2. Procédé selon la revendication 1,
caractérisé en ce que les données de niveau de puissance (PD) sont appliquées dans chaque tranche de temps de la trame, également à la voie de commande.

3. Dispositif de commande de la puissance de transmission de la voie de commande d'un émetteur de station de base qui émet des données par trames successives, chacune comprenant un nombre prédéterminé de tranches de temps, ce dispositif comprenant des moyens pour commander un niveau de puissance constant,
caractérisé en ce que lesdits moyens comprennent des moyens de blocage (1, 2, 3) pour bloquer la puissance d'émission durant chaque trame de commande à un niveau déterminé au cours de la première tranche de temps de la trame.

4. Dispositif selon la revendication 3,
caractérisé en ce que les moyens de bloquage comprennent un compteur (1) et des tampons successifs (2, 3) dont le deuxième (2) stocke des données de niveau de puissance (PD) reçues dans la première tranche de temps de chaque trame pendant toute la durée de la trame, des données de niveau de puissance (PD) éventuellement reçues dans les autres tranches de temps de la trame étant gardées dans le premier tampon (3).
